# EUROPÄISCHE PATENTSCHRIFT

(11) **EP 2 514 063 B1**
(45) Veröffentlichungstag und Bekanntmachung des Hinweises auf die Patenterteilung: **02.10.2019**
(21) Anmeldenummer: 10770843.0
(22) Anmeldetag: 28.10.2010
(51) Int. Cl.: H02J 7/00

(54) **ENERGIESPEICHERSYSTEM UND VERFAHREN ZU DESSEN BETREIBEN**
ENERGY STORAGE SYSTEM AND METHOD FOR THE OPERATION THEREOF
SYSTÈME D'ACCUMULATION D'ÉNERGIE ET PROCÉDÉ POUR LE FAIRE FONCTIONNER

(30) Priorität: 17.12.2009 DE 102009054820
(43) Veröffentlichungstag der Anmeldung: 24.10.2012
(73) Patentinhaber: Robert Bosch GmbH, 70442 Stuttgart (DE)
(72) Erfinder: BUTZMANN, Stefan, 71717 Beilstein (DE); FINK, Holger, 70567 Stuttgart (DE)
(86) Internationale Anmeldenummer: PCT/EP2010/066311
(87) Internationale Veröffentlichungsnummer: WO 2011/082856

(56) Entgegenhaltungen:
- EP-A1- 2 104 199
- EP-A2- 1 020 973
- DE-A1- 10 230 278
- US-A1- 2003 107 352
- US-A1- 2004 125 618
- US-A1- 2005 084 745

## Beschreibung

Die Erfindung betrifft ein Energieversorgungssystem mit einem mehrere Speichermodule aufweisenden elektrischen Energiespeichersystem, insbesondere Batteriesystem, einer Ermittlungsvorrichtung zur Ermittlung von Zustandsgrößen der Speichermodule und einem Energieübertrager zur Energieübertragung zwischen den Speichermodulen und einer nachgeschalteten elektrischen Einrichtung. Die Erfindung betrifft weiterhin ein Verfahren zum Betreiben eines Energieversorgungssystems.

### Stand der Technik

Ein derartiges Energieversorgungssystem und ein Verfahren zum Betreiben eines Energieversorgungssystems ist zum Beispiel aus Windkraftanlagen, aber auch aus Elektro- oder Hybrid-Antrieben von Kraftfahrzeugen bekannt.

Um die für die jeweilige Anwendung geforderte Leistung und Energie zur Verfügung stellen zu können, werden als Speicherzellen ausgebildete Speichermodule in Serie und teilweise zusätzlich parallel geschaltet. Eine Vielzahl von Speichermodulen sind in Serie geschaltet, um die beispielsweise in einem Kraftfahrzeug für den Elektromotor des Elektro- oder Hybridantriebs erforderliche hohe Betriebsspannung durch Summierung der Spannung der einzelnen als Speicherzellen ausgebildeten Speichermodule des elektrischen Energiespeichersystems, also deren Gesamtspannung, zu erreichen. Dabei ist das Energiespeichersystem zum Beispiel als Batteriesystem mit einer Vielzahl von Batteriezellen ausgebildet. Die hohe Betriebsspannung kann durch ausgangsseitige Schalter von den folgenden, als leistungselektronische Bauelemente wie Wechselrichter ausgebildeten Energieübertragern abgekoppelt werden. Da der gesamte Ausgangsstrom des als Batteriesystem ausgebildeten elektrischen Energiespeichersystems bei einer Serienschaltung der als Batteriezellen ausgebildeten Speichermodule in jeder der Batteriezellen fließt, wobei der Ladungstransport durch elektrochemikalische Prozesse innerhalb der Batteriezellen geschieht, bedeutet der Ausfall einer einzigen Batteriezelle im Extremfall, dass die Gesamtanordnung keinen Strom und damit keine elektrische Energie für eine nachgeschaltete elektrische Einrichtung mehr bereitstellen kann. Um einen drohenden Ausfall einer Batteriezelle rechtzeitig erkennen zu können, wird gewöhnlich eine als sogenanntes Batterie-Managementsystem ausgebildete Ermittlungsvorrichtung verwendet, welche mit beiden Polen jeder der Batteriezellen verbunden oder verbindbar ist und in regelmäßigen oder wählbaren Abständen Betriebsparameter wie Spannung und Temperatur jeder Batteriezelle und daraus mindestens eine Zustandsgröße wie zum Beispiel den Ladezustand (State of Charge, SoC) der Zelle bestimmt. Durch die Serien- und/oder Parallelschaltung der Zellen ergeben sich jedoch hohe Spannungen und/oder hohe Stromflüsse an den Polen der Batteriezellen. Dies bedeutet einen hohen Aufwand bei gleichzeitig geringer Flexibilität der elektrischen Betriebsdaten des Batteriesystems.

Weiterhin ergeben sich gerade für eine Serienschaltung einer Vielzahl von Batteriezellen zum Erreichen einer hohen Gesamtspannung folgende Probleme: Für unterschiedliche Betriebszustände der mit der Batterie zu betreibenden Einrichtung, wie z. B. eine elektrische Maschine, werden Bedingungen für die bereitzustellende Betriebsspannung, den maximalen Strom und die gespeicherte Energie gestellt, welche sich nur dann vereinen lassen, wenn eine höhere Zahl von Batteriezellen gekoppelt wird, als zur Erfüllung der Anforderungen eigentlich notwendig wäre. Dies erhöht den Preis und das insbesondere bei einem Elektroauto störende Gewicht und Volumen des Batteriesystems. Die Montage der Batteriesystems, also das Zusammenschalten der einzelnen Zellen, erfolgt wegen der durch die Serienschaltung summierten Spannungen der einzelnen Batteriezellen bei hohen Gesamtspannungen bis 1000V, weshalb ein Austausch des Batteriesystems, einzelner Zellen oder Module nicht in örtlichen Werkstätten bzw. im Falle einer stationären Anwendung nur mit Spezialwerkzeug von besonders ausgebildeten Fachkräften vorgenommen werden kann. Dadurch ergibt sich ein hoher logistischer Aufwand für die Wartung von Batteriesystemen im Fehlerfall. Weiterhin liegen Teile der Ermittlungsvorrichtung auf entsprechend hohem elektrischem Potential. Um das Batteriesystem spannungsfrei zu schalten, d.h. die eigentliche Batterie von der Last zu trennen, müssen Leistungsschalter vorgesehen werden, welche typischerweise als Schütze ausgeführt und welche für die zu erwartenden hohen Ströme und Spannungen sehr teuer sind.

Die Erfindung macht es sich zur Aufgabe ein Energieversorgungssystem und ein Verfahren zum Betreiben eines derartigen Energieversorgungssystems zur Überwindung der obengenannten Nachteile des Standes der Technik einzuführen.

### Offenbarung der Erfindung

Die Aufgabe wird erfindungsgemäß durch die Merkmale der Ansprüche 1 und 5 gelöst.

Der Energieübertrager des erfindungsgemäßen Energieversorgungssystems weist mehrere Gleichstromsteller auf, die ausgangsseitig miteinander in Serie geschaltet sind und jeder der Gleichstromsteller (Gleichspannungswandler) mit seinen Eingängen an jeweils ein Speichermodul des Energiespeichersystems anschließbar ist, wobei das Energieversorgungssystem eine Ansteuervorrichtung zum Ansteuern der Gleichstromsteller in Abhängigkeit der ermittelten Zustandsgröße des jeweils angeschlossenen Speichermoduls aufweist. Durch das modulare Verschalten kann die eingangsseitig des Energieübertragers anliegende Spannung und/oder der eingangsseitig des Energieübertragers fließende Strom reduziert werden.

Unter einem elektrischen Energiespeichersystem im Sinne der vorliegenden Erfindung ist ein Energiespeichersystem mit Energiespeichern zu verstehen, denen entweder elektrische Energie entnommen werden kann oder zugeführt und entnommen werden kann. Der elektrische Energiespeicher ist als Ladungsspeicher und/oder als magnetischer Energiespeicher und/oder elektrochemischer Energiespeicher ausgebildet. Ein elektrochemischer Energiespeicher ist insbesondere eine wiederaufladbare Batterie beziehungsweise ein Akkumulator.

Unter einem Gleichstromsteller ist insbesondere ein bidirektionaler Gleichstromsteller (DC/DC-Umsetzer) zu verstehen. Gemäß einer vorteilhaften Ausgestaltung der Erfindung ist vorgesehen, dass die Gleichstromsteller als Fly-Back-Konverter, als Forward-Konverter, Push-Pull-Konverter, Half-Bridge-Konverter, Full-Bridge-Konverter sowie als Resonanzwandler ausgeführt sein können. Die vorgenannten Konverter sind bekannte Gleichstromsteller.

Mit Vorteil liegt die (Gesamt-)Spannung eines jeden der Speichermodule im Bereich 0.1 V ≤ X ≤ 120 V, besonders bevorzugt im Bereich 0.2 V ≤ X ≤ 50 V.

Durch die sich ergebende geringe Klemmspannung zwischen den Eingängen jedes der Gleichstromsteller liegt an keinem primärseitigen Anschluss eine Spannung an, die einen besonderen Umfang mit der Batterie beim Austausch einzelner Energiespeichermodule oder Batteriezellen erforderlich machen würde. Da die Ermittlungsvorrichtung eingangsseitig des Energieübertragers misst, muss diese bei einem erfindungsgemäßen Energieversorgungssystem nur entsprechend geringen Sicherheitsanforderungen zu genügen. Gleiches gilt auch für die Ansteuervorrichtung zum Ansteuern der Gleichstromsteller, da diese ja erst ausgangsseitig miteinander in Serie geschaltet sind. Ermittlungsvorrichtung und Ansteuervorrichtung sind insbesondere Teil eines ManagementSystems des Energieversorgungssystems.

Der modulare Aufbau des Energieübertragers erlaubt die Wahl einer je nach Betriebssituation geeigneten Gesamtspannung bzw. eines je nach Betriebssituation geeigneten Gesamtstroms. Außerdem wird die Ausgangsspannung unabhängig von der Zahl der primärseitig angeschlossenen Speicherzellen. Dadurch kann die Auslegung des Energiespeichersystems rein nach Energie- und Leistungskriterien, unabhängig von der für die jeweilige Anwendung geforderten Gesamtspannung erfolgen.

Ein weiterer Vorteil besteht darin, dass teure Leistungsschalter (Schütze) zum Trennen des Energiespeichers von der Last und Zuschalten zu der Last entfallen können, weil die Hochspannung am Speicherausgang durch Abschalten der Gleichstromsteller auf einfache Weise abgeschaltet werden kann.

Gemäß einer vorteilhaften Ausgestaltung der Erfindung ist vorgesehen, dass die Ansteuervorrichtung eine Ansteuervorrichtung zum Ansteuern der Gleichstromsteller in Abhängigkeit einer Leistungsanforderung an das Energiespeichersystem ist. Somit hat die Ansteuervorrichtung als Eingangsgrößen sowohl die - bezogen auf das jeweilige Speichermodul - mindestens eine ermittelte Zustandsgröße und eine von außen vorgegebene Leistungsanforderung an das Energiespeichersystem. Die Leistungsanforderung kann dabei sowohl eine Anforderung zur Abgabe von elektrischer Energie als auch eine Anforderung zur Aufnahme von elektrischer Energie sein.

Generell ist die Zustandsgröße jede den Zustand der Speichermodule beschreibende Größe, bevorzugt ist die Zustandsgröße der Speichermodule jedoch ein Ladezustand (State of Charge: SoC) und/oder ein Gesundheitszustand (State of Health: SoH) des jeweiligen Speichermoduls.

Gemäß der Erfindung ist vorgesehen, dass die Ermittlungsvorrichtung eine Recheneinrichtung aufweist, in der mindestens ein Auswertemittel, insbesondere ein mathematisches Modell der Speichermodule, hinterlegt ist, wobei die Recheneinrichtung durch Vergleich mindestens eines gemessenen Parameters (Modulstrom I_{b}, Modulspannung U_{b}, Modultemperatur T_{b}) eines der Speichermodule mit jeweils einem zugeordneten Referenz-Parameter (Modellstrom Iₘ, Modellspannung Uₘ, Modelltemperatur Tₘ) des Auswertemittels die Zustandsgröße SoC, SoH dieses Speichermoduls bestimmt.

Insbesondere ist der Parameter eine am jeweiligen Speichermodul abgreifbare Modulspannung U_{b}. Die Modulspannung ergibt sich aus der Spannung der Speicherzelle(n) und ihrer Verschaltung im Speichermodul.

Die Erfindung betrifft weiterhin ein Verfahren zum Betreiben eines Energieversorgungssystems, insbesondere eines vorstehend genannten Energieversorgungssystems. Es ist vorgesehen, dass das Energieversorgungssystem ein mehrere Speichermodule aufweisendes elektrisches Energiespeichersystem und einen mehrere Gleichstromsteller aufweisenden Energieübertrager umfasst, wobei die Gleichstromsteller ausgangsseitig miteinander in Serie geschaltet sind, jeder der Gleichstromsteller an jeweils ein Speichermodul des Energiespeichersystems angeschlossen ist und jeder der Gleichstromsteller zum Betreiben des Energieversorgungssystems zumindest in Abhängigkeit einer ermittelten Zustandsgröße des an diesen Gleichstromsteller angeschlossenen Speichermoduls angesteuert wird.

Unter einem elektrischen Energiespeichersystem im Sinne der vorliegenden Erfindung ist ein Energiespeichersystem mit Energiespeichern zu verstehen, denen entweder elektrische Energie entnommen werden kann oder zugeführt und entnommen werden kann. Der elektrische Energiespeicher ist als Ladungsspeicher und/oder als magnetischer Energiespeicher und/oder elektrochemischer Energiespeicher ausgebildet. Ein elektrochemischer Energiespeicher ist insbesondere eine wiederaufladbare Batterie beziehungsweise ein Akkumulator.

Gemäß einer vorteilhaften Ausgestaltung der Erfindung ist vorgesehen, dass das Ansteuern der Gleichstromsteller weiterhin auch in Abhängigkeit einer Leistungsanforderung an das Energiespeichersystem erfolgt. Somit erfolgt die Ansteuerung sowohl in Abhängigkeit der - bezogen auf das jeweilige Speichermodul - mindestens eine ermittelte Zustandsgröße und einer von außen vorgegebene Leistungsanforderung an das Energiespeichersystem. Die Leistungsanforderung kann dabei sowohl eine Anforderung zur Abgabe von elektrischer Energie als auch eine Anforderung zur Aufnahme von elektrischer Energie sein.

Generell ist die Zustandsgröße jede den Zustand der Speichermodule beschreibende Größe, insbesondere ist die Zustandsgröße der Speichermodule ein Ladezustand SoC und/oder ein Gesundheitszustand SoH des jeweiligen Speichermoduls.

Gemäß der Erfindung ist ein Auswertemittel, insbesondere ein mathematisches Modells der Speichermodule vorgesehen, wobei durch Vergleich mindestens eines gemessenen Parameters (z.B. Modulstrom I_{b}, Modulspannung U_{b}, Modultemperatur T_{b}) eines der Speichermodule mit jeweils einem zugeordneten Referenz-Parameter (z.B. Modellstrom Iₘ, Modellspannung Uₘ, Modelltemperatur Tₘ) des Auswertemittels die Zustandsgröße (z.B. SoC, SoH) dieses Speichermoduls bestimmt wird. Insbesondere ist der Parameter eine am jeweiligen Speichermodul abgreifbare Modulspannung U_{b}.

Die Erfindung wird im Folgenden anhand der Abbildungen von Ausführungsbeispielen näher erläutert. Es zeigen:
- Fig. 1: ein Schaltbild eines ersten Ausführungsbeispiels eines Energieversorgungssystems mit Energiespeichersystem und Energieübertrager,
- Fig. 2: ein Schaltbild eines Energieversorgungssystems mit Energiespeichersystem und Energieübertrager und
- Fig. 3: ein Schaltbild der Verschaltung einer Ermittlungsvorrichtung und einer Ansteuervorrichtung mit einem Gleichstromsteller des Energieübertragers und einem Speichermodul des Energieversorgungssystems.

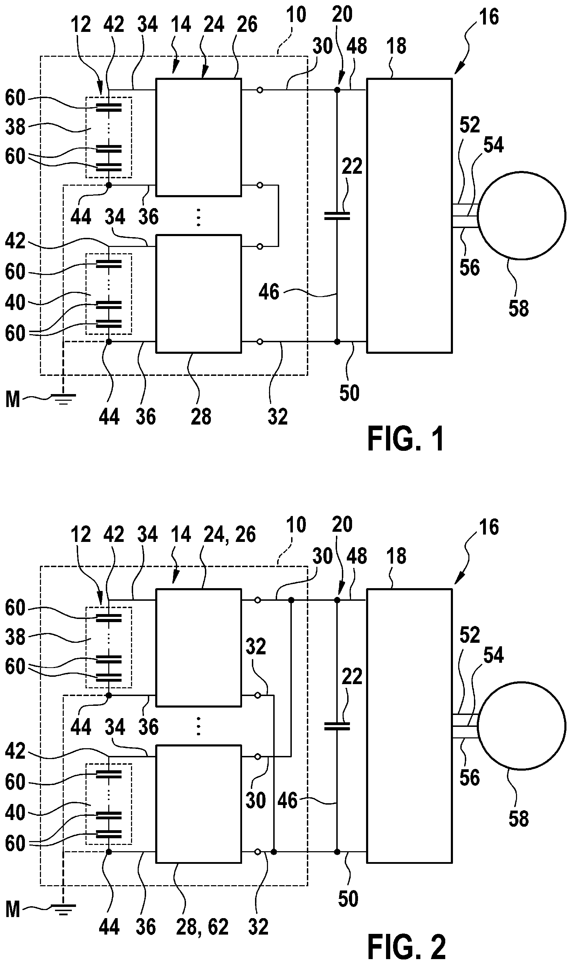

Das Energieversorgungssystem 10 der Fig. 1 weist ein als Batteriesystem ausgebildetes Energiespeichersystem 12 und einen Energieübertrager 14 auf. Dem Energieübertrager 14 ist eine elektrische Einrichtung 16 mit einem Wechselrichter 18 und einen zwischen dem Energieübertrager 14 und dem Wechselrichter 18 zwischengeschalteten Zwischenkreis 20, der einen Zwischenkreiskondensator 22 aufweist, nachgeschaltet. Der Energieübertrager 14 weist ein Gleichstromsteller-Modul 24 auf, das seinerseits eine Vielzahl von Gleichstromstellern 26, 28 umfasst, von denen jedoch lediglich zwei Gleichstromsteller 26, 28 dargestellt sind. Die Gleichstromsteller 26, 28 sind (innerhalb des Gleichstromsteller-Moduls 24) ausgangsseitig, also zwischenkreisseitig, in Serie geschaltet, wobei besagtes Gleichstromsteller-Modul 24 ausgangsseitig einen ersten und einen zweiten Modul-Ausgang 30, 32 aufweist. Jeder der Gleichstromsteller (DC/DC-Umrichter) 26, 28 ist mittels eines ersten und eines zweiten Eingangs 34, 36 an jeweils ein Speichermodul 38, 40 des Energiespeichersystems 12 über dessen Pole 42, 44 elektrisch angeschlossen. Der Zwischenkreiskondensator 22 ist innerhalb des Zwischenkreises 20 in einem Strompfad 46 angeordnet, der den ersten und zweiten Modul-Ausgang 30, 32 bzw. einen ersten und einen zweiten Wechselrichter-Eingang 48, 50 verbindet.

Der Wechselrichter 18 ist mit seinen Drehstrom-Ausgängen 52, 54, 56 mit einer als Drehstrommaschine ausgebildeten elektrischen Maschine 58 elektrisch verbunden. Die elektrische Maschine 58 ist insbesondere eine als Elektromotor und/oder Generator wirkende elektrische Maschine. Bevorzugt ist das Energieversorgungssystem 10 ein Energieversorgungssystem zur Versorgung eines elektrischen Antriebssystems, eines Kraftfahrzeugs mit mindestens einer elektrischen Maschine 58.

Der zweite Eingang 36 eines jeden der Gleichstromsteller 26, 28 ist auf dem gleichen elektrischen Potential, insbesondere - hier dargestellt - auf Masse M. Jedes der Speichermodule 38, 40 weist eine Vielzahl von Speicherzellen 60 auf, von denen jeweils nur drei Speicherzellen 60 dargestellt sind. Bei den Speichermodulen 38, 40 handelt es sich insbesondere um Lithium-Ionen-Batteriemodule (Lithium-Ionen-Akkumulatormodule) des als Batteriesystem ausgebildeten Energiespeichersystems 12.

Die Fig. 2 zeigt ein nicht erfindungsgemäßes Energieversorgungssystem 10 mit einem Energiespeichersystem 12 und einem Energieübertrager 14, das im Wesentlichen dem Energieversorgungssystem 10 der Fig. 1 entspricht, so dass hier nur auf die Unterschiede eingegangen wird. Der Energieübertrager 14 der Fig. 2 weist zwei Gleichstromsteller-Module 24, 62 mit je genau einem Gleichstromsteller 26, 28 auf, wobei die Gleichstromsteller-Module 24, 62 mit ihren jeweiligen Modul-Ausgängen 30, 32 zwischenkreisseitig parallel geschaltet sind.

In dem sich unmittelbar aus dem Ausführungsbeispiel ergebenden Fall sind die Gleichstromsteller 26, 28 innerhalb der zugeordneten Gleichstromstellermodule 24, 62 ausgangsseitig immer in Serie geschaltet und die Gleichstromstellermodule 24, 62 eingangsseitig immer parallel geschaltet. Am allgemeinen Fall ist eine beliebige Kombination von Serien- und/oder Parallelschaltungen möglich.

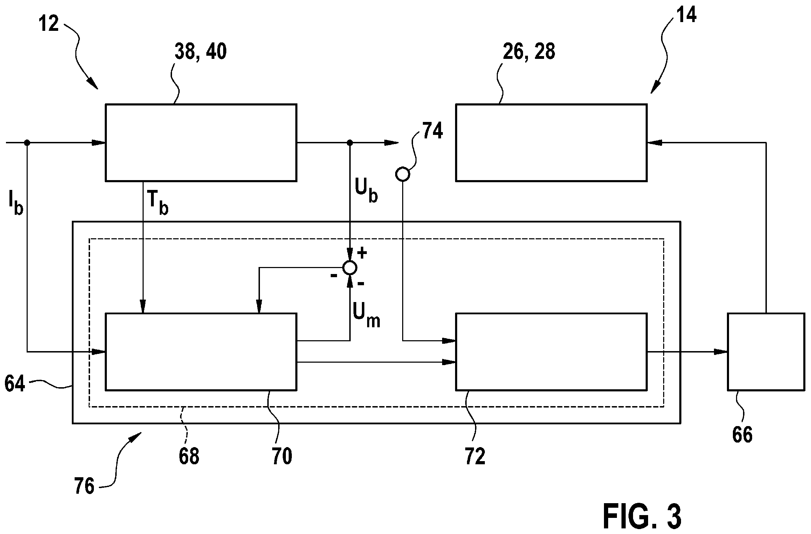

Die Figur 3 zeigt eine Verschaltung einer Ermittlungsvorrichtung 64 und einer Ansteuervorrichtung 66 mit einem Gleichstromsteller 26, 28 des Energieübertragers 14 und einem Speichermodul 38, 40 des Energieversorgungssystems12 . Die Ermittlungsvorrichtung 64 weist eine Recheneinrichtung 68 auf, in der zwei als mathematische Modelle der Speichermodule 38, 40 ausgebildete Auswertemittel 70, 72 hinterlegt sind. Die Recheneinrichtung 68 bestimmt dabei mittels des ersten Auswertemttels (Modell des Speichermoduls mit Parameteradaption) 70 durch Vergleich mindestens eines gemessenen Parameters eines der Speichermodule 38, 40, nämlich der Modulspannung U_{b}, mit jeweils einem zugeordneten Referenz-Parameter - hier also der Modell-Spannung Uₘ des ersten Auswertemittels 70, und zusätzlicher gemessener Parameter, nämlich des Modul-Stroms I_{b} und der Modul-Temperatur T_{b} mindestens eine der Zustandsgrößen dieses Speichermoduls (38, 40) und die Modellparameter. Diese Zustandsgröße und die Modellparameter werden an das zweite Auswertemittel 72 (Modell des Speichermoduls zur Zustandsprädikation) übergeben, mittels dessen die Ermittlungsvorrichtung 64 aus der Zustandsgröße und den Modellparametern zusammen mit weiteren Eingangsgrößen 74 eine Vorhersage des Zustands und/oder Verhaltens des zugeordneten Speichermoduls 38, 40 generiert. Die weiteren Eingangsgrößen 74 beschreiben zum Beispiel Betriebsabläufe und Randbedingungen der Prädikation. Die Vorhersage des Zustands und/oder Verhaltens des zugeordneten Speichermoduls 38, 40 ist Eingangsgröße der Ansteuervorrichtung 66, die den Gleichstromsteller 26, 28 in Abhängigkeit der ermittelten Zustandsgröße des jeweils angeschlossenen Speichermoduls 38, 40 und einer wählbaren Betriebsstrategie ansteuert. Ermittlungsvorrichtung 64 und Ansteuervorrichtung 66 sind insbesondere Teil eines Energiespeicher-Managementsystems 76.

Bei einer Betriebsstrategie "gleichmäßige Alterung" wird zum Beispiel mittels der in Fig. 3 dargestellten Speicherzustandserkennung und -prädiktion - welche Teil des Energiespeicher-Managementsystems 76 ist - festgestellt, dass eine oder mehrere Zellen eines Speichermoduls stärker gealtert sind, als die Zellen anderer Speichermodule, In diesem Fall wird das betroffene Speichermodul künftig in geringerem Umfang an den Lade- und Entladevorgängen beteiligt werden. Dies wird durch geeignete Ansteuerung des entsprechenden Gleichstromstellers erreicht, welcher primärseitig an das betroffene Speichermodul angeschlossen ist. Dadurch wird das betroffenen Speichermodul weniger stark weiter altern als die anderen Speichermodule und es lässt sich ein Zustand herbeiführen, bei dem die Speichermodule wieder einen vergleichbaren Alterungszustand bzw. Gesundheitszustand aufweisen. Der hierfür erforderliche Freiheitsgrad die Speichermodule unterschiedliche betreiben zu können wird durch den Einsatz der modularen Gleichstromsteller bereitgestellt.

Bei einer Betriebsstrategie "an Zelleigenschaften angepasster Betrieb (leistungsoptimierter Betrieb)" können die Speichermodule in Abhängigkeit von der aktuell vorliegenden Leistungsanforderung an das Energieversorgungssystem sowie in Abhängigkeit von dem sogenannten Leistungs- zu Energieverhältnis (P/E-Verhältnis) der eingesetzten Zellen unterschiedlich stark an den Lade- bzw. Entladevorgängen beteiligt werden.

Weitere Betriebsstrategien sind denkbar. Grundsätzlich können alle Eigenschaften des Energiespeichersystems optimiert werden, auf die eine unterschiedliche Betriebsweise der Speichermodule Einfluss nehmen kann.

Als erstes Beispiel sei hier eine Betriebsweise genannt, die zu einer gleichmäßigen Temperatur der verschiedenen Speichermodule führt. Weist ein Speichermodul eine höhere Temperatur auf als die anderen Speichermodule, kann es zeitweise weniger stark belastet werden als die andern Speichermodule. Dadurch wird sich die Temperatur bei geeigneter Rücknahme der Belastung wieder an die Temperatur der anderen Module angleichen. Umgekehrt kann ein Speichermodul mit geringerer Temperatur zeitweise stärker belastet werden als die anderen Speichermodule um seine Temperatur wieder an die Temperatur der anderen Speichermodule anzugleichen.

Als zweites Beispiel sei eine Betriebsweise genannt, die zu einem gleichmäßigen mittleren Ladezustand der Speichermodule führt. Weist ein Speichermodul z.B. einen höheren Ladezustand auf, als der über alle Speichermodule gemittelte Ladezustand, kann es zeitweise stärker an Vorgängen beteiligt werden, bei denen den Speichermodulen Ladung entnommen wird und/oder weniger stark an Vorgängen beteiligt werden, bei denen den Speichermodulen Ladung zugeführt wird. In umgekehrtem Wirkungssinn gilt das naturlich auch für Speichermodule, die einen niedrigeren Ladezustand aufweisen, als der über alle Speichermodule gemittelte Ladezustand.

Ganz allgemein kann die Betriebsstrategie für das Energiespeichersystem auf Basis von (Speicher-) Modellen unter Optimierung von Gütekriterien erfolgen. Als Stellgröße für die Optimierung kann der Freiheitsgrad herangezogen werden, dass die Speichermodule aufgrund der zum Einsatz kommenden modularen Gleichstromsteller in unterschiedlicher Weise betrieben werden können (dies betrifft die Abgabe elektrischer Energie an den Gleichspannungszwischenkreis bzw. die Aufnahme elektrischer Energie aus dem Gleichspannungszwischenkreis).

## Patentansprüche

1. Energieversorgungssystem (10) mit einem mehrere Speichermodule (38, 40) aufweisenden elektrischen Energiespeichersystem (12), insbesondere Batteriesystem, und einem Energieübertrager (14) zur Energieübertragung zwischen den Speichermodulen (38, 40) und einer dem Energieübertrager (14) nachgeschalteten elektrischen Einrichtung (16), wobei der Energieübertrager (14) mehrere Gleichstromsteller (26, 28) aufweist, **dadurch gekennzeichnet, dass** die Gleichstromsteller (26, 28) ausgangsseitig miteinander elektrisch in Serie geschaltet sind und jeder der Gleichstromsteller (26, 28) mit seinen Eingängen (34, 36) an jeweils ein Speichermodul (38, 40) des Energiespeichersystems (12) über dessen Pole (42, 44) elektrisch angeschlossen ist und der zweite Eingang (36) eines jeden der Gleichstromsteller (26, 28) auf dem gleichen Potential ist, wobei eine zur Durchführung folgender Vorgänge angepasste Ermittlungsvorrichtung (64) zur Ermittlung von Zustandsgrößen der Speichermodule (38, 40), die eine Recheneinrichtung (68) aufweist, in der mindestens ein Auswertemittel (70, 72) mit mindestens einem mathematischen Modell der Speichermodule (38, 40), insbesondere zur Vorhersage eines Zustands und/oder Verhaltens des zugeordneten Speichermoduls (38, 40), hinterlegt ist, durch Vergleich mindestens eines gemessenen Parameters eines der Speichermodule (38, 40) mit jeweils einem zugeordneten Referenz-Parameter des Auswertemittels (70) die Zustandsgröße dieses Speichermoduls (38, 40) bestimmt; und eine Ansteuervorrichtung (66) zum Ansteuern der Gleichstromsteller (26, 28) in Abhängigkeit der ermittelten Zustandsgröße des jeweils angeschlossenen Speichermoduls (38, 40) und einer wählbaren Betriebsstrategie, wobei das Ansteuern der Gleichstromsteller (26,28) derart erfolgt, dass das Speichermodul (38, 40) zumindest zeitweise stärker oder weniger stark als die anderen Speichermodule (38, 40) an Lade- und Entladevorgängen beteiligt wird.

2. Energieversorgungssystem nach Anspruch 1, **dadurch gekennzeichnet, dass** die Ansteuervorrichtung (66) eine Ansteuervorrichtung (66) angepasst zum Ansteuern der Gleichstromsteller (26, 28) in Abhängigkeit einer Leistungsanforderung an das Energiespeichersystem (12) ist.

3. Energieversorgungssystem nach einem der vorhergehenden Ansprüche, **dadurch gekennzeichnet, dass** die Zustandsgröße der Speichermodule (38, 40) ein Ladezustand und/oder ein Gesundheitszustand des jeweiligen Speichermoduls (38, 40) ist.

4. Energieversorgungssystem nach einem der vorhergehenden Ansprüche, **dadurch gekennzeichnet, dass** der Parameter eine am jeweiligen Speichermodul (38, 40) abgreifbare Modulspannung ist.

5. Verfahren zum Betreiben eines Energieversorgungssystems (10), insbesondere eines Energieversorgungssystems nach einem der vorhergehenden Ansprüche, das ein mehrere Speichermodule (38, 40) aufweisendes elektrisches Energiespeichersystem (12) und einen mehrere Gleichstromsteller (26, 28) aufweisenden Energieübertrager (14) zur Energieübertragung zwischen den Speichermodulen (38, 40) und einer dem Energieübertrager (14) nachgeschalteten elektrischen Einrichtung (16) umfasst, **dadurch gekennzeichnet, dass** die Gleichstromsteller (26, 28) ausgangsseitig miteinander elektrisch in Serie geschaltet sind, jeder der Gleichstromsteller (26, 28) mit seinen Eingängen (34, 36) an jeweils ein Speichermodul (38, 40) des Energiespeichersystems (12) über dessen Pole (42, 44) elektrisch angeschlossen ist und der zweite Eingang (36) eines jeden der Gleichstromsteller (26, 28) auf dem gleichen Potential ist, wobei jeder der Gleichstromsteller (26, 28) zum Betreiben des Energieversorgungssystems (12) zumindest in Abhängigkeit einer ermittelten Zustandsgröße des an diesen Gleichstromsteller (26, 28) angeschlossenen Speichermoduls (38, 40) und einer wählbaren Betriebsstrategie angesteuert wird, wobei die Ermittlung der Zustandsgröße mittels einer Ermittlungsvorrichtung (64) erfolgt, die eine Recheneinrichtung (68) aufweist, in der mindestens ein Auswertemittel (70) mit mindestens einem mathematischen Modell der Speichermodule (38, 40), insbesondere zur Vorhersage eines Zustands und/oder Verhaltens des zugeordneten Speichermoduls (38, 40), hinterlegt ist, wobei die Recheneinrichtung (68) durch Vergleich mindestens eines gemessenen Parameters eines der Speichermodule (38, 40) mit jeweils einem zugeordneten Referenz-Parameter des Auswertemittels (70) die Zustandsgröße dieses Speichermoduls (38, 40) bestimmt, wobei das Ansteuern der Gleichstromsteller (26,28) derart erfolgt, dass das Speichermodul (38, 40) zumindest zeitweise stärker oder weniger stark als die anderen Speichermodule (38, 40) an Lade- und Entladevorgängen beteiligt wird.

6. Verfahren nach Anspruch 5, **dadurch gekennzeichnet, dass** das Ansteuern der Gleichstromsteller (26, 28) weiterhin auch in Abhängigkeit einer Leistungsanforderung an das Energiespeichersystem (12) erfolgt.

7. Verfahren nach Anspruch 5 oder 6, **dadurch gekennzeichnet, dass** die Zustandsgröße der Speichermodule (38, 40) ein Ladezustand und/oder ein Gesundheitszustand des jeweiligen Speichermoduls (38, 40) ist.

8. Verfahren nach einem der Ansprüche 5 bis 7, **dadurch gekennzeichnet, dass** der Parameter eine am jeweiligen Speichermodul (38, 40) abgreifbare Modulspannung ist.

9. Verfahren nach einem der Ansprüche 5 bis 8, **dadurch gekennzeichnet, dass** die ermittelte Zustandsgröße der Speichermodule (38, 40) und die Referenz-Parameter an das Auswertemittel (72) übergeben werden, mittels dessen die Ermittlungsvorrichtung (64) aus der Zustandsgröße und den Referenz-Parametern zusammen mit weiteren Eingangsgrößen (74) eine Vorhersage eines Zustands und/oder Verhaltens des zugeordneten Speichermoduls (38, 40) generiert.

## Claims

1. Energy supply system (10) having an electrical energy storage system (12) which has a plurality of storage modules (38, 40), in particular a battery system, and having an energy transmitter (14) for transmitting energy between the storage modules (38, 40) and an electrical device (16) downstream of the energy transmitter (14), wherein the energy transmitter (14) has a plurality of DC chopper controllers (26, 28), **characterized in that** the DC chopper controllers (26, 28) are electrically connected in series with one another on the output side and the inputs (34, 36) of each of the DC chopper controllers (26, 28) are electrically connected to a respective storage module (38, 40) of the energy storage system (12) via the poles (42, 44) of said storage module, and the second input (36) of each of the DC chopper controllers (26, 28) is at the same potential, wherein a determination apparatus (64), which is adapted to perform the following operations and is intended to determine state variables of the storage modules (38, 40) and has a computing device (68), which stores at least one evaluation means (70, 72) with at least one mathematical model of the storage modules (38, 40), in particular for predicting a state and/or behaviour of the associated storage module (38, 40), determines, by comparing at least one measured parameter of one of the storage modules (38, 40) with in each case an associated reference parameter of the evaluation means (70), the state variable of this storage module (38, 40); and a control apparatus (66) for controlling the DC chopper controllers (26, 28) on the basis of the determined state variable of the respectively connected storage module (38, 40) and a selectable operating strategy, wherein the DC chopper controllers (26, 28) are controlled in such a manner that the storage module (38, 40) is at least occasionally involved in charging and discharging operations to a greater or lesser extent than the other storage modules (38, 40) .

2. Energy supply system according to Claim 1, **characterized in that** the control apparatus (66) is a control apparatus (66) adapted to control the DC chopper controllers (26, 28) on the basis of a power requirement imposed on the energy storage system (12) .

3. Energy supply system according to one of the preceding claims, **characterized in that** the state variable of the storage modules (38, 40) is a state of charge and/or a state of health of the respective storage module (38, 40).

4. Energy supply system according to one of the preceding claims, **characterized in that** the parameter is a module voltage which can be tapped off at the respective storage module (38, 40).

5. Method for operating an energy supply system (10), in particular an energy supply system according to one of the preceding claims, comprising an electrical energy storage system (12) which has a plurality of storage modules (38, 40), and an energy transmitter (14) which has a plurality of DC chopper controllers (26, 28) and is intended to transmit energy between the storage modules (38, 40) and an electrical device (16) downstream of the energy transmitter (14), **characterized in that** the DC chopper controllers (26, 28) are electrically connected in series with one another on the output side, the inputs (34, 36) of each of the DC chopper controllers (26, 28) are electrically connected to a respective storage module (38, 40) of the energy storage system (12) via the poles (42, 44) of said storage module, and the second input (36) of each of the DC chopper controllers (26, 28) is at the same potential, wherein each of the DC chopper controllers (26, 28) is controlled to operate the energy supply system (12) at least on the basis of a determined state variable of the storage module (38, 40) connected to this DC chopper controller (26, 28) and a selectable operating strategy, wherein the state variable is determined by means of a determination apparatus (64) having a computing device (68) which stores at least one evaluation means (70) with at least one mathematical model of the storage modules (38, 40), in particular for predicting a state and/or behaviour of the associated storage module (38, 40), wherein the computing device (68) determines, by comparing at least one measured parameter of one of the storage modules (38, 40) with in each case an associated reference parameter of the evaluation means (70), the state variable of this storage module (38, 40), wherein the DC chopper controllers (26, 28) are controlled in such a manner that the storage module (38, 40) is at least occasionally involved in charging and discharging operations to a greater or lesser extent than the other storage modules (38, 40) .

6. Method according to Claim 5, **characterized in that** the DC chopper controllers (26, 28) are furthermore also controlled on the basis of a power requirement imposed on the energy storage system (12).

7. Method according to Claim 5 or 6, **characterized in that** the state variable of the storage modules (38, 40) is a state of charge and/or a state of health of the respective storage module (38, 40).

8. Method according to one of Claims 5 to 7, **characterized in that** the parameter is a module voltage which can be tapped off at the respective storage module (38, 40).

9. Method according to one of Claims 5 to 8, **characterized in that** the determined state variable of the storage modules (38, 40) and the reference parameters are transferred to the evaluation means (72), by means of which the determination apparatus (64) generates a prediction of a state and/or behaviour of the associated storage module (38, 40) from the state variable and from the reference parameters together with further input variables (74) .

## Revendications

1. Système d'alimentation en énergie (10) comportant un système d'accumulation d'énergie électrique (12), notamment un système de batterie, comportant plusieurs modules d'accumulation (38, 40), et un transmetteur d'énergie (14) pour transmettre l'énergie entre les modules d'accumulation (38, 40) et un dispositif électrique (16) connecté en aval du transmetteur d'énergie (14), dans lequel le transmetteur d'énergie (14) comporte plusieurs convertisseurs de courant continu (26, 28), **caractérisé en ce que** les convertisseurs de courant continu (26, 28) sont connectés électriquement en série les uns aux autres côté sortie et chacun des convertisseurs de courant continu (26, 28) est raccordé électriquement par ses entrées (34, 36) à un module d'accumulation (38, 40) respectif du système d'accumulation d'énergie (12) par l'intermédiaire de ses pôles (42, 44) et la deuxième entrée (36) de l'un respectif des convertisseurs de courant continu (26, 28) est au même potentiel, dans lequel un dispositif de détermination (64) adapté pour effectuer les opérations suivantes pour déterminer des grandeurs d'état des modules d'accumulation (38, 40), qui comporte un dispositif de calcul (68) dans lequel est stocké au moins un moyen d'évaluation (70, 72) comportant au moins un modèle mathématique des modules d'accumulation (38, 40), en particulier pour prédire un état et/ou un comportement du module de d'accumulation (38, 40) associé, détermine la grandeur d'état dudit module associé (38, 40) en comparant au moins un paramètre mesuré de l'un des modules d'accumulation (38, 40) avec un paramètre de référence associé respectif du moyen d'évaluation (70) ; et un dispositif de commande (66) destiné à commander les régulateurs de courant continu (26, 28) en fonction de la grandeur d'état déterminée du module d'accumulation (38, 40) respectivement raccordé et d'une stratégie de fonctionnement pouvant être sélectionnée, dans lequel la commande des régulateurs de courant continu (26, 28) est effectuée de telle sorte que le module d'accumulation (38, 40) soit sollicité au moins temporairement plus fortement ou moins fortement que les autres modules d'accumulation (38, 40) lors d'opérations de charge et de décharge.

2. Système d'alimentation en énergie selon la revendication 1, **caractérisé en ce que** le dispositif de commande (66) est un dispositif de commande (66) qui est conçu pour commander les régulateurs de courant continu (26, 28) en fonction d'un besoin en énergie du système d'accumulation d'énergie (12).

3. Système d'alimentation en énergie selon l'une des revendications précédentes, **caractérisé en ce que** la grandeur d'état des modules d'accumulation (38, 40) est un état de charge et/ou un état de santé du module d'accumulation (38, 40) respectif.

4. Système d'alimentation en énergie selon l'une des revendications précédentes, **caractérisé en ce que** le paramètre est une tension de module pouvant être prélevée sur le module d'accumulation (38, 40) respectif.

5. Procédé pour faire fonctionner un système d'alimentation en énergie (10), notamment un système d'alimentation en énergie selon l'une des revendications précédentes, qui comprend un système d'accumulation d'énergie électrique (12) comportant plusieurs modules d'accumulation (38, 40) et un transmetteur d'énergie (14) comportant plusieurs régulateurs de courant continu (26, 28) pour transmettre l'énergie entre les modules d'accumulation (38, 40) et un dispositif électrique (16) connecté en aval du transmetteur d'énergie (14), **caractérisé en ce que** les convertisseurs de courant continu (26, 28) sont connectés électriquement en série les uns aux autres côté sortie, chacun des convertisseurs de courant continu (26, 28) est raccordé électriquement par ses entrées (34, 36) à un module d'accumulation (38, 40) respectif du système d'accumulation d'énergie (12) par l'intermédiaire de ses pôles (42, 44) et la deuxième entrée (36) de l'un respectif des convertisseurs de courant continu (26, 28) est au même potentiel,
dans lequel, pour faire fonctionner le système d'alimentation en énergie (12), chacun des régulateurs de courant continu (26, 28) est commandé au moins en fonction d'une grandeur d'état déterminée du module d'accumulation (38, 40) raccordé audit régulateur de courant continu (26, 28) et d'une stratégie de fonctionnement pouvant être sélectionnée, dans lequel la détermination de la grandeur d'état s'effectue au moyen d'un dispositif de détermination (64) qui comporte un dispositif de calcul (68) dans lequel est stocké au moins un moyen d'évaluation (70) avec au moins un modèle mathématique des modules d'accumulation (38, 40), notamment pour prévoir un état et/ou un comportement du module d'accumulation (38, 40) associé, dans lequel le dispositif de calcul (68) détermine la grandeur d'état dudit module d'accumulation (38, 40) en comparant au moins un paramètre mesuré de l'un des modules d'accumulation (38, 40) avec un paramètre de référence associé respectif du moyen d'évaluation (70), dans lequel la commande des régulateurs de courant continu (26, 28) est effectuée de telle sorte que le module d'accumulation (38, 40) soit sollicité au moins temporairement plus fortement ou moins que les autres modules d'accumulation (38, 40) lors d'opérations de charge et de décharge.

6. Procédé selon la revendication 5, **caractérisé en ce que** la commande des régulateurs de courant continu (26, 28) est en outre également effectuée en fonction d'un besoin en puissance demandée au système de stockage d'énergie (12).

7. Procédé selon la revendication 5 ou 6, **caractérisé en ce que** la grandeur d'état des modules d'accumulation (38, 40) est un état de charge et/ou un état de santé du module d'accumulation (38, 40) respectif.

8. Procédé selon l'une des revendications 5 à 7, **caractérisé en ce que** le paramètre est une tension de module pouvant être prélevée sur le module d'accumulation (38, 40) respectif.

9. Procédé selon l'une des revendications 5 à 8, **caractérisé en ce que** la grandeur d'état déterminée des modules d'accumulation (38, 40) et les paramètres de référence sont transmis au moyen d'évaluation (72) au moyen duquel le dispositif de détermination (64) génère à partir de la grandeur d'état et des paramètres de référence, en association avec d'autres grandeurs d'entrée (74), une prédiction d'un état et/ou d'un comportement du module d'accumulation (38, 40) associé.
